# EUROPÄISCHE PATENTSCHRIFT

(11) **EP 0 725 127 B1**
(45) Veröffentlichungstag und Bekanntmachung des Hinweises auf die Patenterteilung: **04.11.1998**
(21) Anmeldenummer: 96100631.9
(22) Anmeldetag: 18.01.1996
(51) Int. Cl.: C10J 3/54

(54) **Verfahren zum Vergasen von brennbare Bestandteile enthaltendem Material in der zirkulierenden Wirbelschicht**
Process for gasification of a material containing combustible substances in a circulating fluidized bed
Procédé pour la gazéification de matériau contenant des substances combustibles dans une couche fluidisée circulante

(30) Priorität: 03.02.1995 DE 19503438
(43) Veröffentlichungstag der Anmeldung: 07.08.1996
(73) Patentinhaber: METALLGESELLSCHAFT AG, 60323 Frankfurt am Main (DE)
(72) Erfinder: Vostan, Peter, D-60437 Frankfurt am Main (DE); Löffler, Johannes, Dr., D-61348 Bad Homburg (DE); Hirschfelder, Hansjobst, D-60389 Frankfurt am Main (DE); Albrecht, Johannes, Dr., D-61206 Wöllstadt (DE)

(56) Entgegenhaltungen:
- EP-A- 0 008 469
- EP-A- 0 062 363
- EP-A- 0 082 673
- EP-A- 0 633 303
- WO-A-93/23500
- DE-A- 2 512 317
- GB-A- 2 115 129
- US-A- 4 111 158
- US-A- 4 153 427

## Beschreibung

Die Erfindung betrifft ein Verfahren zum Vergasen von brennbare Bestandteile enthaltendem Material in der zirkulierenden Wirbelschicht, wobei man das Material im Wirbelschichtreaktor unter Zufuhr von sauerstoffhaltigem Gas bei Temperaturen im Bereich von 600 bis 1000°C vergast, vom oberen Bereich des Wirbelschichtreaktors ein Gas-Feststoff-Gemisch einem Abscheider zuführt, aus dem Abscheider staubhaltiges Gas abzieht und getrennt davon abgeschiedene Feststoffe ableitet und die Feststoffe mindestens teilweise in den unteren Bereich des Wirbelschichtreaktors zurückführt, und wobei man das staubhaltige Gas aus dem Abscheider einer Brennkammer zuführt, in welcher man das Gas bei Temperaturen von 1200 bis 1900°C unter Bildung flüssiger Schlacke verbrennt, aus der Brennkammer flüssige Schlacke und getrennt davon ein Verbrennungsgas abzieht, welches man in einer Abhitzeverwertung unter Bildung von Wasserdampf indirekt kühlt.

Ein solches Verfahren ist aus DE-A-42 35 412 bekannt (hierzu korrespondiert das US-Patent 5 425 317). Der Erfindung liegt die Aufgabe zugrunde, das bekannte Verfahren zu verbessern und dabei insbesondere die Energieausnutzung zu erhöhen. Gleichzeitig sollen Verschlackungen, Anbackungen und Korrosionen an Wärmetauscherflächen vermieden werden. Erfindungsgemäß geschieht dies dadurch, daß man mindestens einen Teil der im Abscheider abgeschiedenen Feststoffe einem Wirbelbettkühler aufgibt und gekühlte Feststoffe mindestens teilweise in den unteren Bereich des Wirbelschichtreaktors zurückführt, und daß man Wasserdampf aus der Abhitzeverwertung zum indirekten Kühlen der Feststoffe durch den Wirbelbettkühler leitet, wobei der Wasserdampf auf Temperaturen von 300 bis 600°C überhitzt wird.

Beim erfindungsgemäßen Verfahren wird als Wertstoff überhitzter Wasserdampf erzeugt, der vielfältig verwendbar ist. Gleichzeitig wird durch die Überhitzung des Wasserdampfs im Wirbelbettkühler sichergestellt, daß keine Anbackungen oder Verschlackungen entstehen. Der Wirbelbettkühler mit seinem wirbelnd bewegten Bett ist ein gut zu regelndes Aggregat, das für die Handhabung heißer, körniger Feststoffe bestens geeignet ist. Gleichzeitig wird durch die Überhitzung des Wasserdampfs im Wirbelbettkühler sichergestellt, daß keine Anbackungen oder Verschlackungen entstehen. Eine Verfahrensvariante besteht darin, diesem Wirbelbettkühler nicht nur heiße Feststoffe aus dem Abscheider, sondern auch brennbare Bestandteile enthaltendes Material zuzuführen. In diesem Fall kann man den Wirbelbettkühler mit oxidierender oder reduzierender Gasatmosphäre betreiben. Der beim erfindungsgemäßen Verfahren im Wirbelbettkühler erzeugte überhitzte Wasserdampf wird vorzugsweise durch eine Turbine geführt, wo er arbeitleistend entspannt wird. Die Turbine kann mit einem Stromgenerator gekoppelt sein.

Die zu vergasenden Materialien sind vielfältiger Art, es kann sich z.B. um industrielle oder kommunale Abfälle, Biomassen, verschiedenartige Schlämme, um Kohle oder Braunkohle oder um Mischungen dieser Materialien handeln. Zusätzlich kann man Abfallflüssigkeiten und Abfallgase in den Wirbelschichtreaktor leiten.

Es ist für die Energieausnutzung zweckmäßig, daß man in der Abhitzeverwertung auch Luft erwärmt und mindestens einen Teil der erwärmten Luft in den Wirbelbettkühler und/oder in den Wirbelschichtreaktor leitet. Im Wirbelbettkühler dient die Luft als Fluidisierungsmedium; alternativ kann man im Wirbelbettkühler auch Verbrennungsgas, das man nach der Abhitzeverwertung zurückführt, zum Fluidisieren verwenden.

Ausgestaltungsmöglichkeiten des Verfahrens werden mit Hilfe der Zeichnung erläutert. Es zeigt:
- Fig. 1: das Fließschema einer Vergasungsanlage in schematischer Darstellung,
- Fig. 2: eine Variante des Wirbelbettkühlers und
- Fig. 3: eine Variante der Abhitzeverwertung.

Das zu vergasende Material, z.B. Kohle, Schlamm oder Abfallstoffe, wird in der Leitung (1) herangeführt, bei Bedarf durch einen Trockner (2) geleitet und dann durch die Leitung (3) dem Wirbelschichtreaktor (4) aufgegeben. Sauerstoffhaltiges Gas, z.B. Luft oder mit Sauerstoff angereicherte Luft, wird durch die Leitung (5) in den Reaktor gegeben. Der Reaktor (4) arbeitet bevorzugt bei einem Druck von 1 bis 10 bar, die Temperaturen liegen im Bereich von 600 bis 1000°C und zumeist bei mindestens 700°C. Wie es den Bedingungen der zirkulierenden Wirbelschicht entspricht, wird ständig ein Gas-Feststoff-Gemisch durch den Kanal (7) zum Abscheider (8) geführt, bei dem es sich üblicherweise um einen Zyklon handelt. Abgeschiedene Feststoffe gelangen von der Abzugsleitung (9) teilweise direkt durch die Leitung (10) in den unteren Bereich des Reaktors (4) und andererseits über das Dosierventil (11) und die Leitung (12) zunächst in einen Wirbelbettkühler (13). Von hier aus werden gekühlte Feststoffe zusammen mit Wirbelgas durch die Leitung (14) ebenfalls in den unteren Bereich des Reaktors (4) zurückgeführt. Der Reaktor (4) ist ferner mit einer Ascheabzugsleitung (15) versehen.

Staubhaltiges Gas mit einem Heizwert von etwa 2000 bis 7000 kJ/Nm³ zieht man in der Leitung (18) aus dem Abscheider (8) ab und gibt es einer Brennkammer (19) auf, der man durch die Leitung (20) auch sauerstoffhaltiges Gas (z.B. Luft, mit Sauerstoff angereicherte Luft oder technisch reinen Sauerstoff) zuführt. Ferner ist es möglich, in die Brennkammer (19) Zusatz-Brennstoff einzuspeisen, für den die Leitung (21) vorgesehen ist. Bei diesem Zusatz-Brennstoff kann es sich z.B. auch um Feststoffe aus der Leitung (9) oder Asche aus der Leitung (15) handeln, was in der Zeichnung der besseren Übersichtlichkeit wegen nicht dargestellt ist.

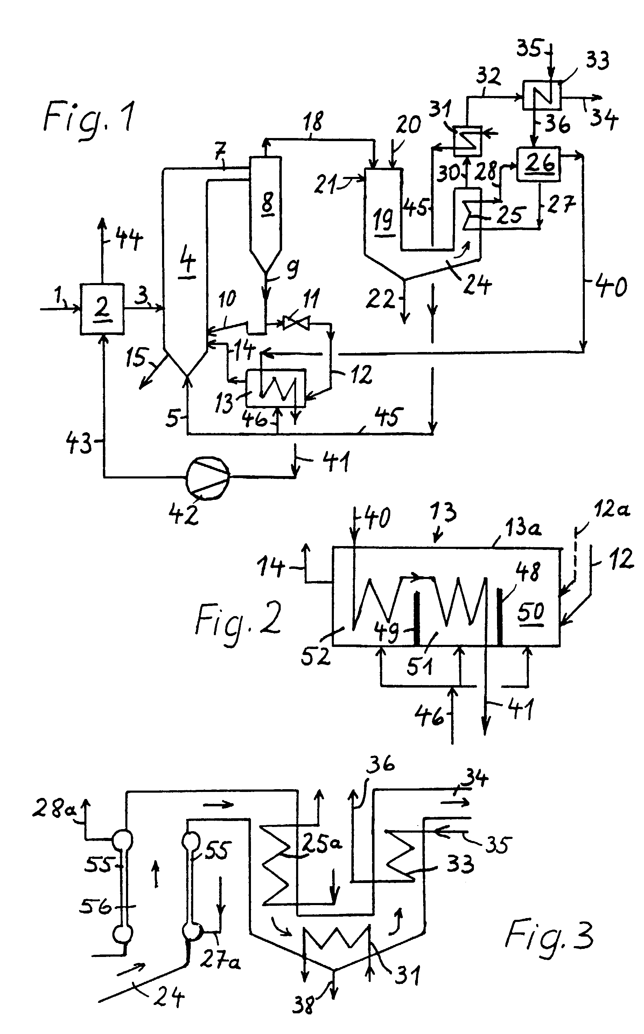

In der Brennkammer (19) herrschen Temperaturen im Bereich von 1200 bis 1900°C und zumeist im Bereich von 1300 bis 1700°C, so daß bei der Verbrennung flüssige Schlacke gebildet wird. Diese flüssige Schlacke wird durch die Leitung (22) abgezogen. Das in der Brennkammer (19) gleichzeitig gebildete Verbrennungsgas wird durch den Kanal (24) einer Abhitzeverwertung zugeführt, die in Fig. 1 vereinfacht dargestellt ist. Hierzu gehört eine erste indirekte Wärmeaustauschstufe (25), üblicherweise in der Form eines Abhitzekessels, um Wasserdampf zu erzeugen. Zu diesem Zweck wird aus einem Dampfsammelbehälter (26) erwärmtes Wasser durch die Leitung (27) durch die erste Wärmeaustauschstufe (25) geführt, wobei das Wasser zumindest teilweise verdampft und Wasser und Wasserdampf durch die Leitung (28) zurück in den Behälter (26) gegeben werden.

Das durch die erste Wärmeaustauschstufe (25) teilweise gekühlte Verbrennungsgas gelangt durch die Leitung (30) zu einem Luftvorwärmer (31) und dann durch die Leitung (32) zu einem Speisewasservorwärmer (33). Das in der Leitung (34) abströmende, etwa auf 100 bis 300°C abgekühlte Verbrennungsgas wird der weiteren Reinigung, z.B. Entstaubung und Entschwefelung, zugeführt. Speisewasser, das man in der Leitung (35) heranführt, wird im Vorwärmer (33) indirekt erwärmt und durch die Leitung (36) dem Dampfsammelbehälter (26) zugeführt.

Gebildeten Wasserdampf, der üblicherweise eine Temperatur im Bereich von 150 bis 300°C und einen Druck von 15 bis 80 bar aufweist, zieht man in der Leitung (40) aus dem Behälter (26) ab und leitet ihn zur Überhitzung durch den Wirbelbettkühler (13). Von den heißen Feststoffen, die durch die Leitung (12) herangeführt werden, nimmt der Wasserdampf durch indirekten Wärmeaustausch Wärme auf und wird mit einer Temperatur im Bereich von 300 bis 600°C durch die Leitung (41) abgezogen. Dieser überhitzte Wasserdampf ist ein wertvolles Produkt, das vielfältig verwendet werden kann. Eine vorteilhafte Verwendung besteht darin, den überhitzten Wasserdampf durch eine Entspannungsturbine (42) zu leiten. Die arbeitleistende Entspannung in der Turbine (42) kann z.B. zur Stromerzeugung genutzt werden. In der Turbine wird in an sich bekannter, nicht dargestellter Weise ein Teil des Wasserdampfs kondensiert. Der restliche Wasserdampf wird einer Zwischenstufe der Turbine entnommen und in der Leitung (43) zum Trockner (2) geführt, wo er fühlbare Wärme durch indirekten Wärmeaustausch an das zu vergasende Material abgibt. Restdampf und Trocknungsbrüden zieht man in der Leitung (44) ab.

Die im Luftvorwärmer (31) durch indirekten Wärmeaustausch erwärmte Luft kann auf verschiedene Weise genutzt werden. In Fig. 1 ist dargestellt, daß man die erwärmte Luft in der Leitung (45) abführt, sie teilweise durch die Leitung (46) in den Wirbelbettkühler (13) leitet und den Rest durch die Leitung (5) dem Reaktor (4) zuführt. In beiden Fällen dient diese erwärmte Luft als Fluidisierungsmedium, wobei sie im Reaktor (4) auch den Sauerstoff zur Partialoxidation liefert.

Fig. 2 zeigt eine Variante des Wirbelbettkühlers (13), die sich im Verfahren vorteilhaft verwenden läßt. Innerhalb des Gehäuses (13a) befinden sich hier zwei wehrartige Zwischenwände (48) und (49), welche die Bewegungen der Feststoffe von der Einlaßkammer (50) über die Zwischenkammer (51) bis zur Auslaßkammer (52) hemmen aber nicht völlig behindern. Die vom Abscheider (8) (Fig. 1) kommenden heißen Feststoffe werden dem Wirbelbettkühler der Fig. 2 durch die Leitung (12) zugeführt und zunächst in der Kammer (50) verwirbelt. Möglich ist es, einen Teil des in der Vergasung zu verarbeitenden Materials, z.B. Kohle oder Abfälle, zusätzlich durch die gestrichelte Leitung (12a) ebenfalls dem Wirbelbettkühler (13) aufzugeben. Während die Feststoffe verwirbelt werden, wandern sie über die Zwischenwände (48) und (49) in die Auslaßkammer (52), werden dort durch die Leitung (14) abgezogen und zumindest teilweise in den Reaktor (4) zurückgeführt. Wirbelmedium, z.B. erwärmte Luft, wird durch die Leitung (46) herangeführt und in die Kammern (50), (51) und (52) hinein verteilt. Das Wirbelgas verläßt zusammen mit den gekühlten Feststoffen den Kühler (13) durch die Leitung (14). Selbstverständlich kann die Anzahl der Zwischenwände (48) und (49) und damit der Kammern von der Darstellung der Fig. 2 abweichen.

Im Wirbelbettkühler der Fig. 2 wird der Wasserdampf, der durch die Leitung (40) herangeführt wird, durch Leitungsschlangen geführt, wobei er Energie aufnimmt. Der so überhitzte Wasserdampf verläßt den Wirbelbettkühler (13) in der Leitung (41) zur bereits beschriebenen weiteren Verwendung.

Fig. 3 zeigt, wie die Abhitzeverwertung für das in der Brennkammer (19) erzeugte, im Kanal (24) herangeführte Verbrennungsgas ausgestaltet sein kann. Zunächst leitet man das heiße Verbrennungsgas, das Temperaturen von 1200 bis 1900°C aufweist, durch einen von Rohren (55) umgebenen Kanal (56). Diesen Rohren wird erwärmtes Kesselspeisewasser aus dem in Fig. 1 dargestellten Dampfsammelbehälter (26) durch die Leitung (27a) zugeführt, wobei dieses Wasser in den Rohren (55) teilweise verdampft und das gebildete Wasser-Dampf-Gemisch in der Leitung (28a) abgezogen und zurück in den Dampfsammelbehälter geführt wird. Man sorgt hierbei dafür, daß die Wände der Rohre (55), die mit dem Verbrennungsgas in Kontakt stehen, auf höchstens 500°C und vorzugsweise höchstens 400°C erwärmt werden, um dort Anbackungen zu vermeiden. In ähnlicher, nicht dargestellter Weise kann auch die Wand der Brennkammer (19) mit Rohren versehen sein, denen man Kühlwasser zuführt.

Das den Kanal (56) verlassende Verbrennungsgas strömt dann durch einen indirekten Wärmeaustauscher (25a), der ebenfalls mit dem Dampfsammelbehälter (26) verbunden ist. Weitere Wärme gibt das Verbrennungsgas im Luftvorwärmer (31) ab und eine weitere Kühlung des Verbrennungsgases erfolgt im anschließenden Speisewasservorwärmer (33). Üblicherweise scheidet sich aus dem Verbrennungsgas während der Kühlung Staub ab, den man durch die Leitung (38) abzieht. Gekühltes Verbrennungsgas verläßt die Abhitzeverwertung der Fig. 3 durch die Leitung (34).

### Beispiel

In einer Anlage, wie sie in Fig. 1 dargestellt ist, mit einem Wirbelbettkühler (13) gemäß Fig. 2 und der in Fig. 3 dargestellten Abhitzeverwertung, werden pro Stunde 16000 kg kommunaler Restmüll verarbeitet. Der Restmüll, der durch eine vorausgegangene Sortierung praktisch frei von Glas und Metall ist, hat einen Feuchtigkeitsgehalt von 31 Gew.-% und einen unteren Heizwert von 10140 kJ/kg. Die nachfolgend angegebenen Daten sind teilweise berechnet.

Durch die Leitung (3) werden 12060 kg/h getrockneter Restmüll mit 3 Gew.-% Feuchte dem Vergasungsreaktor (4) aufgegeben, die Vergasung erfolgt bei 1,5 bar und einer Temperatur von 900°C. Das Gas in der Leitung (18), das in einer Menge von 26400 Nm³/h anfällt und pro Nm³ 80 g Staub enthält und einen unteren Heizwert von 3320 kJ/Nm³ besitzt, weist die in der Tabelle 1 in Spalte A angegebenen Komponenten auf:

**Tabelle 1**

| | A | B |
|---|---|---|
| CO₂ | 10,3 Vol.-% | 14,4 Vol.-% |
| CO | 9,1 Vol.-% | - |
| H₂ | 7,8 Vol.-% | - |
| CH₄ | 1,8 Vol.-% | - |
| CₙHₘ | 0,6 Vol.-% | - |
| N₂ | 55,0 Vol.-% | 67,6 Vol.-% |
| H₂O | 15,1 Vol.-% | 14,3 Vol.-% |
| HCl | 0,3 Vol.-% | - |
| O₂ | - | 3,7 Vol.-% |

Der Brennkammer werden 30000 Nm³/h eines Luft-O₂-Gemischs zugeführt, das einen O₂-Gehalt von 26 Vol.-% aufweist. Die Verbrennung erfolgt unter Zugabe von 2900 kg/h Bodenasche mit einem C-Gehalt von 2 Gew.-%, abgezogen aus der Leitung (15), bei einer Temperatur von 1620°C, wobei 4100 kg/h flüssige Schlacke gebildet werden. Das Verbrennungsgas hat die in der Tabelle 1, Spalte B angegebene Zusammensetzung. Weitere Daten ergeben sich aus der Tabelle 2:

**Tabelle 2**

| | Menge | Temperatur | Druck |
|---|---|---|---|
| Kesselspeisewasser in Leitung (36) | 52000 kg/h | 203°C | 54 bar |
| | | | |
| Wasserdampf in Leitung (40) | 52000 kg/h | 263°C | 50 bar |
| | | | |
| Feststoffe in Leitung (9) und in Leitung (12) | 50000 kg/h | 900°C | - |
| | 25000 kg/h | 900°C | - |
| | | | |
| Luft in Leitung (45) | 17430 Nm³/h | 300°C | 1,7 bar |
| | | | |
| Luft in Leitung (5) | 13000 Nm³/h | 300°C | 1,7 bar |
| | | | |
| Wasserdampf in Leitung (41) | 52000 kg/h | 420°C | 54 bar |
| | | | |
| Wasserdampf in Leitung (43) | 10000 kg/h | 200°C | 5,5 bar |
| | | | |
| Verbrennungsgas in Leitung (34) | 54200 Nm³/h | 233°C | 1,0 bar |

## Patentansprüche

1. Verfahren zum Vergasen von brennbare Bestandteile enthaltendem Material in der zirkulierenden Wirbelschicht, wobei man das Material im Wirbelschichtreaktor unter Zufuhr von sauerstoffhaltigem Gas bei Temperaturen im Bereich von 600 bis 1000°C vergast, vom oberen Bereich des Wirbelschichtreaktors ein Gas-Feststoff-Gemisch einem Abscheider zuführt, aus dem Abscheider staubhaltiges Gas abzieht und getrennt davon abgeschiedene Feststoffe ableitet und die Feststoffe mindestens teilweise in den unteren Bereich des Wirbelschichtreaktors zurückführt, und wobei man das staubhaltige Gas aus dem Abscheider einer Brennkammer zuführt, in welcher man das Gas bei Temperaturen von 1200 bis 1900°C unter Bildung flüssiger Schlacke verbrennt, aus der Brennkammer flüssige Schlacke und getrennt davon ein Verbrennungsgas abzieht, welches man in einer Abhitzeverwertung unter Bildung von Wasserdampf indirekt kühlt, dadurch gekennzeichnet, daß man mindestens einen Teil der im Abscheider abgeschiedenen Feststoffe einem Wirbelbettkühler aufgibt und gekühlte Feststoffe mindestens teilweise in den unteren Bereich des Wirbelschichtreaktors zurückführt, und daß man Wasserdampf aus der Abhitzeverwertung zum indirekten Kühlen der Feststoffe durch den Wirbelbettkühler leitet, wobei der Wasserdampf auf Temperaturen von 300 bis 600°C überhitzt wird.

2. Verfahren nach Anspruch 1, dadurch gekennzeichnet, daß man überhitzten Wasserdampf aus dem Wirbelbettkühler durch eine Turbine leitet.

3. Verfahren nach Anspruch 2, dadurch gekennzeichnet, daß man den restlichen Energiegehalt des aus der Turbine abströmenden Wasserdampfs zum Erwärmen und Trocknen des zu vergasenden Materials verwendet.

4. Verfahren nach Anspruch 1 oder einem der folgenden, dadurch gekennzeichnet, daß man in der Abhitzeverwertung Luft erwärmt und mindestens einen Teil der erwärmten Luft in den Wirbelbettkühler und/oder in den Wirbelschichtreaktor leitet.

5. Verfahren nach Anspruch 1 oder einem der folgenden, dadurch gekennzeichnet, daß man brennbare Bestandteile enthaltendes Material zusammen mit Feststoffen aus dem Abscheider dem Wirbelbettkühler aufgibt.

6. Verfahren nach Anspruch 1 oder einem der folgenden, dadurch gekennzeichnet, daß man erwärmtes Wasser aus einem Dampfsammelbehälter in der Abhitzeverwertung durch Rohre eines von den Rohren durchzogenen Wandabschnitts eines das Verbrennungsgas führenden Kanals leitet und das in den Rohren mindestens teilweise verdampfte Wasser in den Dampfsammelbehälter zurückleitet, wobei man die Temperatur der Rohrwände, die mit dem Verbrennungsgas in Kontakt stehen, auf höchstens 500°C hält.

7. Verfahren nach Anspruch 1 oder einem der folgenden Ansprüche, dadurch gekennzeichnet, daß die Brennkammer Röhren aufweist, in die Kühlwasser eingeleitet wird.

## Claims

1. A method for gasification of material containing combustible constituents in a circulating fluidised bed, wherein the material is gasified in a fluidised bed reactor with oxygen-containing gas being supplied at temperatures in the range from 600 to 1000°C, a gas/solids mixture is fed to a separator from the upper region of the fluidised bed reactor, dust-containing gas is withdrawn from the separator and solids separated off separately therefrom are removed and the solids are returned at least in part to the lower region of the fluidised bed reactor, and wherein the dust-containing gas from the separator is fed to a combustion chamber in which the gas is burned at temperatures of 1200 to 1900°C, forming liquid slag, liquid slag and separately therefrom a combustion gas is withdrawn from the combustion chamber, which is indirectly cooled in a waste-heat utilisation stage, forming steam,
characterised in that at least part of the solids separated off in the separator are charged into a fluidised bed cooler and cooled solids are returned at least in part into the lower region of the fluidised bed reactor, and that steam from the waste-heat utilisation stage is passed through the fluidised bed cooler for indirectly cooling the solids, the steam being superheated to temperatures of 300 to 600°C.

2. A method according to Claim 1, characterised in that superheated steam from the fluidised bed cooler is passed through a turbine.

3. A method according to Claim 2, characterised in that the rest of the energy content of the steam flowing away out of the turbine is used for heating and drying the material which is to be gasified.

4. A method according to Claim 1 or one of the following claims, characterised in that air is heated in the waste-heat utilisation stage and at least part of the heated air is passed into the fluidised bed cooler and/or into the fluidised bed reactor.

5. A method according to Claim 1 or one of the following claims, characterised in that material containing combustible constituents is charged into the fluidised bed cooler together with solids from the separator.

6. A method according to Claim 1 or one of the following claims, characterised in that heated water from a steam collection vessel in the waste-heat utilisation stage is passed through pipes of a wall section, through which the pipes run, of a duct carrying the combustion gas and the water at least partially evaporated in the tubes is returned into the steam collection vessel, the temperature of the pipe walls which are in contact with the combustion gas being kept at at most 500°C.

7. A method according to Claim 1 or one of the following claims, characterised in that the combustion chamber has pipes into which cooling water is introduced.

## Revendications

1. Procédé de gazéification de matériau contenant des constituants combustibles en lit fluidisé circulant, qui consiste à gazéifier le matériau dans le réacteur à lit fluidisé avec apport de gaz contenant de l'oxygène en opérant à des températures de l'ordre de 600 à 1000° C, à envoyer un mélange gaz et de matière solide de la partie supérieure du réacteur à lit fluidisé à un séparateur, à soutirer du séparateur du gaz contenant de la poussière et, indépendamment de cela, à évacuer de la matière solide séparée, et à retourner la matière solide au moins partiellement à la partie inférieure du lit fluidisé, et à envoyer le gaz contenant de la poussière du séparateur à une chambre de combustion dans laquelle le gaz est brûlé à des températures de 1200 à 1900° C avec formation d'une scorie liquide, à soutirer de la chambre de combustion de la scorie liquide et, indépendamment de cela, un gaz de combustion que l'on refroidit indirectement dans un dispositif de valorisation de la chaleur perdue avec formation de vapeur d'eau, caractérisé en ce qu'il consiste à charger au moins une partie de la matière solide séparée dans le séparateur à un dispositif de refroidissement lit fluidisé, et à retourner de la matière solide refroidie au moins partiellement dans la partie inférieure du réacteur à lit fluidisé, et à envoyer de la vapeur d'eau provenant du dispositif de valorisation de la chaleur perdue dans le dispositif de refroidissement à lit fluidisé pour refroidir indirectement la matière solide, la vapeur d'eau étant surchauffée à des températures de 300 à 600° C.

2. Procédé suivant la revendication 1, caractérisé en ce qu'il consiste à envoyer de la vapeur d'eau surchauffée provenant du dispositif de refroidissement à lit fluidisé dans une turbine.

3. Procédé suivant la revendication 2, caractérisé en ce qu'il consiste à utiliser le contenu énergétique restant de la vapeur d'eau sortant de la turbine pour chauffer et sécher le matériau à gazéifier.

4. Procédé suivant la revendication 1 ou l'une des suivantes, caractérisé en ce qu'il consiste à chauffer de l'air dans le dispositif de vaporisation de la chaleur perdue et à envoyer au moins une partie de l'air chauffé au dispositif de refroidissement à lit fluidisé/ou au réacteur à lit fluidisé.

5. Procédé suivant la revendication 1 ou l'une des suivantes. caractérisé en ce qu'il consiste à charger le dispositif de refroidissement à lit fluidisé de matériau contenant des constituants combustibles en même temps que des matières solides provenant du séparateur.

6. Procédé suivant la revendication 1 ou l'une des suivantes. caractérisé en ce qu'il consiste à envoyer de l'eau réchauffée provenant d'une cuve collectrice de vapeur au dispositif de valorisation de la chaleur perdue par des tubes d'une partie de paroi d'un canal, dans lequel passe le gaz de combustion, qui est traversée par les tubes et à retourner l'eau, qui s'est évaporée au moins partiellement dans les tubes, à la cuve collectrice de vapeur, la température des parois de tubes, qui viennent en contact avec le gaz de combustion, étant maintenue à 500° C au plus.

7. Procédé suivant la revendication 1 ou l'une des suivantes, caractérisé en ce que la chambre de combustion comporte des tubes dans lesquels passe de l'eau de refroidissement.
